# EUROPÄISCHE PATENTSCHRIFT

(11) **EP 1 264 472 B1**
(45) Veröffentlichungstag und Bekanntmachung des Hinweises auf die Patenterteilung: **04.08.2004**
(21) Anmeldenummer: 01919166.7
(22) Anmeldetag: 06.03.2001
(51) Int. Cl.: H04M 15/00

(54) **VERFAHREN UND VORRICHTUNG ZUR AUTOMATISIERTEN ABRECHNUNG DER LEISTUNGEN EINES NETZBETREIBERS**
METHOD AND DEVICE FOR AUTOMATICALLY CHARGING THE SERVICES OF A NETWORK OPERATOR
PROCEDE ET DISPOSITIF DE FACTURATION AUTOMATIQUE DES SERVICES D'UN OPERATEUR RESEAU

(30) Priorität: 17.03.2000 DE 10013169
(43) Veröffentlichungstag der Anmeldung: 11.12.2002
(73) Patentinhaber: SIEMENS AKTIENGESELLSCHAFT, 80333 München (DE)
(72) Erfinder: HOEF, Jan, B-9950 Waarschoot (BE)
(86) Internationale Anmeldenummer: PCT/DE2001/000838
(87) Internationale Veröffentlichungsnummer: WO 2001/069945

(56) Entgegenhaltungen:
- US-A- 5 291 543
- US-A- 5 907 802

## Beschreibung

Die vorliegende Erfindung betrifft ein Verfahren und eine Vorrichtung zur automatisierten Abrechnung der Leistungen eines Vermittlungsnetzbetreibers, die dieser gegenüber einem Teilnehmer eines anderen Kommunikationsnetzes erbringt, über welches dieser Teilnehmer den Netzzugang erhält.

Bekannt ist, die Leistungen die durch den Betreiber der Vermittlungsstelle, an der der Teilnehmer direkt angeschlossen ist (Teilnehmernetzbetreiber) dem Teilnehmer direkt anzuzeigen, vermittels des Leistungsmerkmales Advice of Charge. Dabei werden dem Teilnehmer vom Teilnehmernetzbetreiber direkt die Kosten, die entstanden sind durch die Inanspruchnahme einer Leistung, beispielsweise eines Telefongespräches, angezeigt. Dies ist immer besonders dann von Interesse, wenn der Teilnehmer selbst gegenüber einem Dritten diese Kosten abrechnen muß. In Hotels beispielsweise werden die durch die Telefonate eines Gastes entstandenen Kosten diesem bei der Abreise in Rechnung gestellt. Vermittels des oben genannten Leistungsmerkmales Advice of Charge kann nun eine Telefonanlage genau anzeigen, welche Kosten einem bestimmten Gast in einem bestimmten Zeitraum in Rechnung zu stellen sind.

Nachteilig an dem bekannten, geschilderten Stand der Technik ist, daß einzig der Teilnehmernetzbetreiber dem Teilnehmer die Höhe der bei ihm entstandenen Gebühren übermitteln kann. In einer heutigen deregulierten Umgebung der Telekommunikationsnetze bestimmt jedoch nicht der Teilnehmernetzbetreiber, sondern der Betreiber eines zwischengeschalteten Netzes (Vermittlungsnetzbetreiber), der die Verbindung letztlich herstellt und dem die Gebühren zustehen, die Höhe dieser Gebühren. Dieser Vermittlungsnetzbetreiber kann nun nicht dem Teilnehmer direkt die bei ihm entstandenen Kosten übertragen.

Wenn aber nun der Dritte, gegenüber dem der Teilnehmer abrechnen will, Leistungen des Vermittlungsnetzbetreibers in Anspruch nimmt, beispielsweise indem ein Hotelgast über eine Vorwahlnummer eine günstigere Telefongesellschaft für ein Ferngespräch wählt, so ist es dem Teilnehmer nicht möglich, direkt und sofort die Kosten abzurechnen. Er muß warten bis ihn eine Rechnung des Vermittlungsnetzbetreibers auf dem Postwege erreicht. Dadurch wird er oftmals Schwierigkeiten haben, diese Kosten auch bezahlt zu erhalten.

In US 5,907,802 ist beispielsweise ein Mobilfunk-Kommunikationssystem beschrieben, bei dem Verbindungen von und zu mobilen "Dual Mode"-Kommunikationsendgeräten vermittelt werden. Die Vermittlung der Verbindungen erfolgt dabei in Abhängigkeit von den jeweils aktuellen Empfangseigenschaften über unterschiedliche drahtlose Kommunkationsnsetze (Cellular communications oder PCS), wobei die Vermittlung sowie der Vergebührung mit Hilfe eines intelligenten Netzes gesteuert wird.

Weiter ist nach dem Stand der Technik vorgesehen, daß eine Übertragung der Gebührenhöhe zwischen Teilnehmernetzbetreiber und Vermittlungsnetzbetreiber möglich ist, gemäß dem ETSI Standard. Hierzu müssen jedoch sowohl Teilnehmernetzbetreiber als auch Vermittlungsnetzbetreiber die komplexe Logik, die dazu nötig ist, implementieren.

Es ist daher wünschenswert, mit bestehenden Vorrichtungen, ein Verfahren zur Verfügung zu stellen, mit dem auf einfache Art und Weise die Gebühren und Leistungsinformationen vom Vermittlungsnetzbetreiber zu einem Teilnehmer, der über einen Teilnehmernetzbetreiber mit dem Vermittlungsnetzbetreiber verbunden ist, zu übermitteln.

Der Erfindung liegt daher die Aufgabe zugrunde, ein Verfahren und eine Vorrichtung zur Verfügung zu stellen, mit der es ohne aufwendige Anpassungen auf Seiten des Vermittlungsnetzbetreibers möglich ist, automatisiert die Leistungen dieses Vermittlungsnetzbetreibers, die dieser gegenüber einem Teilnehmer, der über einen Teilnehmernetzbetreiber seine Leistungen in Anspruch nimmt, abzurechnen.

Die zuvor beschriebene Aufgabe wird erfindungsgemäß gelöst durch die Merkmale der unabhängigen Ansprüche 1 und 11. Die abhängigen Ansprüche bilden den Grundgedanken der Erfindung in vorteilhafter Weise aus und stellen günstige Ausführungsformen und Verfahren zur Verfügung.

Erfindungsgemäß ist nach Anspruch 1 ein Verfahren zur automatisierten Abrechnung der Leistung eines Vermittlungsnetzbetreibers, die dieser gegenüber einem Teilnehmer eines anderen Telekommunikationsnetzes erbringt, über welches der Teilnehmer den Netzzugang erhalt, vorgesehen.

Zunächst wird die Abrechnungsanforderung zur automatisierten Abrechnung anhand der über das Netz übertragenen Teilnehmer-Identifikationsdaten festgestellt. Sodann werden die Gebühren und/oder Abrechnungsdaten für die in Anspruch genommenen Leistungen bestimmt, wobei die bestimmten Gebühren und/oder Abrechnungsdaten über einen weiteren Dienst des Vermittlungsnetzbetreibers und/oder über ein weiteres Kommunikationsnetz an den Teilnehmer übermittelt werden oder durch diesen abrufbar sind.

Die Übermittlung der Gebuhren- und Abrechnungsdaten über das Internet ist in vorteilhafter Weise möglich - Anspruch 2 -, da gerade solche Teilnehmer wie Krankenhäuser, Hotels und sonstige gewerbliche Teilnehmer, heutzutage meist über einen Internet-Anschluß verfugen oder zumindest über eine E-Mail Adresse erreichbar sind. Es ist insbesondere nicht nötig, die für eine Übertragung der Gebuhrenhöhe zwischen Teilnehmernetzbetreiber und Vermittlungsnetzbetreiber nach dem ETSI Standard notige komplexe Logik zu implementieren. Es sei angemerkt, daß die Übermittlung der Gebühren- und Abrechnungsdaten auch mittels drahtloser Ubertragungstechnologien an mobile, drahtlose Kommunikationsendgeräte erfolgen kann - beispielsweise mittels WAP-Technologie (Wireless Access Protokoll).

Alternativ ist auch die Übermittlung der Gebühren- und Abrechnungsdaten über einen weiteren Dienst des Vermittlungsnetzbetreibers - z.B. mittels Fax - möglich.

In günstiger Weise kann die Abrechnungsanforderung anhand der mit dem Dienstemerkmal CLIP (Calling Line Identification Presentation) übertragenen Teilnehmernummer des rufenden Teilnehmers erkannt werden.

Dies ist vorteilhaft mit geringem Aufwand umzusetzen, da dieses Dienstemerkmal in den digitalen Telekommunikationsnetzen immer vorhanden ist. Die Teilnehmernummer ist daher in einer Vermittlungsstelle beim Vermittlungsnetzbetreiber leicht zuganglich und durch einen Vergleich mit abgespeicherten Nummern derjenigen Teilnehmer, die eine automatisierte Abrechnung wunschen, ist die Abrechnungsanforderung einfach festzustellen.

Günstig kann die Abrechnungsanforderung auch anhand eines im Nutzsignal übertragenen Signals (inline signalling) erkannt werden. Dabei wird ein verstecktes codiertes Signal innerhalb des Nutzsignals übertragen. Bei einem normalen Telefongespräch beispielsweise innerhalb des Sprechsignals, so daß es den Nutzer nicht stört, jedoch von der Vermittlungsstelle des Vermittlungsnetzbetreibers erkannt wird als die Abrechnungsanforderung. Dies kann durch eine eigene Hardware-Box, die beim Teilnehmer steht, bewirkt werden.

Nach Anspruch 5 kann die Abrechnungsanforderung in einem intelligenten Netz, das sich des INAP (Intelligent Network Application Protokoll) bedient, anhand einer hierzu eigens einzufuhrenden Dienstekennung erkannt werden. Dasselbe ist möglich für Mobilfunknetze, die eine CAMEL (Customized Application for Mobil Network Enhanced Logic) besitzen. Die Dienste werden dabei entweder durch bestimmte Dienstekennzahlen, oft eine besondere Vorwahlnummer, wie sie beispielsweise eine Telefonanlage automatisch dazufügen kann, oder die Benutzung des Telekommunikationsnetzes von einem bestimmten Anschluß aus aktiviert. Auf dem SCP (Service Control Point)-Rechner wird dann der Dienst erkannt und entsprechend den Anforderungen ausgeführt. Vorliegend würde dann dieser SCP die Abrechnungsanforderung erkennen und das Verfahren, wie es hier beschrieben ist, durchführen.

Eine solche Einrichtung eines zusätzlichen Dienstes im Rahmen eines intelligenten Netzes ist durch den Vermittlungsnetzbetreiber einfach zu realisieren, da eine Anpassung der vorhandenen bzw. eine Entwicklung intelligenter Netzdienste ausdrücklich vorgesehen ist und hierzu spezielle Softwareprogramme zur Verfügung stehen. Einem Vermittlungsnetzbetreiber steht hierbei eine Art Baukasten aus Einzelelementen bereit, aus deren Kombination sowie der Festlegung von zugehorigen Parametern neue Dienste gebildet werden können.

Nach Anspruch 6 konnen die Gebühren und Abrechnungsdaten auf Anforderung des Teilnehmers übermittelt werden.

Erfindungsgemäß können die Gebühren und Abrechnungsdaten nach Anspruch 7 sofort nach jeder Nutzung des Telekommunikationsnetzes übermittelt werden.

Gunstigerweise können die Gebühren und Abrechnungsdaten per E-Mail übermittelt werden. Dies ist besonders vorteilhaft, da sehr flexibel und jederzeit möglich, insoweit auch der Teilnehmer, der die E-Mail empfangen soll mit dem Internet verbunden ist. Vor allem erfolgt eine Übertragung der Daten sehr schnell, so lange nur der Teilnehmer, der die E-Mail empfangen soll, entweder dauernd mit dem Internet verbunden ist oder zumindest in kurzen Abständen und regelmäßig eine Verbindungsschaltung aufbaut und eventuell angekommene E-Mails von dem ihm zugeordneten Server abholt. Falls dem Teilnehmer das Dienstemerkmal "E-Mail always online with dynamic ISDN (Siemens EWSD Dienstemerkmal)" zur Verfügung steht, kann der Teilnehmer, beispielsweise ein Hotel, die Daten sofort empfangen und verarbeiten, ohne daß manuell abgefragt werden müßte. Insbesondere wenn der Teilnehmer über einen IP-Anschluß Zugang zum Internet hat, können sehr große Datenmengen übertragen werden. Eine E-Mail wird dann auch automatisch empfangen, ohne Zeitverzögerung, bis jeweils eine Anwahl und Verbindung mit dem Internet-Provider erfolgt.
Gunstigerweise können die Gebührendaten in dem in jedem Fall zur Rechnungsstellung nötigen Verrechnungszentrum des Vermittlungsnetzbetreibers in dort benutzten Computern in E-Mail Nachrichten umgesetzt werden. Ein Computer des Verrechnungszentrums kann dann auch als Server dienen und die E-Mail Nachrichten versenden.

Nach Anspruch 9 ist es erfindungsgemäß möglich, die Gebühren und Abrechnungsdaten im Internet für den Teilnehmer einsehbar zur Verfügung zu stellen, so daß dieser sie aus dem Internet abrufen kann. Indem die aktuell entstandenen Kosten und sonstigen Abrechnungsdaten, wie z. B. Einzelverbindungsnachweise, auf einer sog. Webseite im Internet für den Teilnehmer einsehbar sind, kann dieser selbst bestimmen, wann er jeweils eine Abrechnung erstellen möchte, indem er sich die entsprechenden Daten abruft. Für den Vermittlungsnetzbetreiber ist dabei vorteilhaft, daß er nicht viele verschiedene, eventuell individuell vereinbarte Abrechnungsmodi berücksichtigen muß, sondern daß nur die entsprechenden Daten auf der Webseite zur Verfugung gestellt werden mussen in immer gleicher Art und Weise. Die tatsachliche Abrechnung nach bestimmten Zeiträumen oder sonstige Erstellung von individuellen Abrechnungsdaten kann dann beim Teilnehmer auf einem Computer erfolgen.

Anspruch 11 der Erfindung sieht eine Vorrichtung zur automatisierten Abrechnung der Leistungen eines Vermittlungsnetzbetreibers, die dieser gegenüber einem Teilnehmer eines anderen Telekommunikationsnetzes erbringt, über welches der Teilnehmer den Netzzugang erhält, vor.

Die Vorrichtung besteht aus einer Vermittlungsvorrichtung, die anhand der vom Teilnehmer über das Netz übertragenen Daten die Abrechnungsanforderung erkennt. Weiter sind eine Steuereinrichtung bzw. ein Computer zum Bestimmen der Gebühren- und/oder Abrechnungsdaten für die in Anspruch genommenen Leistungen und Mittel zum Übermitteln der Gebühren- und/oder Abrechnungsdaten vorgesehen, wobei die bestimmten Gebührenund/oder Abrechnungsdaten über einen weiteren Dienst des Vermittlungsnetzbetreibers und/oder über ein weiteres Kommunikationsnetz an den Teilnehmer übermittelt werden oder durch diesen abrufbar sind.

Gemaß einer vorteilhaften Weiterbildung sind weitere Mittel zum Übermitteln der Gebühren- und Abrechnungsdaten über das Internet an den Teilnehmer vorgesehen - Anspruch 12. Vorteilhaft kann damit die bereits vorhandene Rechenleistung der üblichen Vermittlungsvorrichtungen ausgenutzt werden.

Nach Anspruch 13 erkennt die Vermittlungsvorrichtung die Abrechnungsanforderung anhand der mit dem Dienstemerkmal CLIP (Calling Line Identification Presentation) übertragenen Teilnehmernummer des rufenden Teilnehmers. Dies ist in einfacher Weise möglich, da das Dienstemerkmal CLIP bereits weitestgehend in den Telekommunikationsnetzen übertragen wird und somit zur Verfügung steht.

Nach Anspruch 14 erkennt die Vermittlungsvorrichtung die Abrechnungsanforderung anhand eines im Nutzsignal ubertragenen Signals (inline signalling).

Vorteilhaft erkennt nach Anspruch 15 die Vermittlungsvorrichtung in einem intelligenten Netz (IN) mit INAP (Intelligent Network Application Protokoll) oder CAMEL (Customized Application for Mobil Network Enhanced Logic) die Abrechnungsanforderung anhand einer Dienstekennung. Diese Dienstekennung kann in bereits beschriebener Art und Weise in intelligenten Netzen neu eingeführt werden. Hierfur stehen Software-Werkzeuge zur Verfügung. Insbesondere wird in den Vermittlungsvorrichtungen ganz allgemein eine Dienstekennung des intelligenten Netzes erkannt und die eigentliche Unterscheidung welcher Dienst angewandt werden soll erst in einem speziellen zentralen Computer vorgenommen, dem SCP. Es ist somit kein weiterer Aufwand in der einzelnen Vermittlungsvorrichtung notig, sondern nur in diesem zentralen Rechner.

Vorteilhaft übermittelt der Computer die Gebühren- und Abrechnungsdaten auf Anforderung des Teilnehmers.

In günstiger Weise übermittelt der Computer die Gebühren- und Abrechnungsdaten sofort nach jeder Nutzung des Telekommunikationsnetzes.

Nach Anspruch 18 übermittelt der Computer die Gebuhren- und Abrechnungsdaten per E-Mail. Dies ist in vorteilhafter und einfacher Weise möglich, da ein Netzanschluß an das Internet mit einem Computer leicht zu realisieren ist.

In gunstiger Art und Weise kann der Computer die Gebührenund Abrechnungsdaten im Internet dem Teilnehmer als sog. Webseite einsehbar und abrufbar zur Verfügung stellen. Vorteilhaft kann der Teilnehmer die Gebühren- und Abrechnungsdaten zu von ihm bestimmten Zeitpunkten aus dem Internet herunterladen.

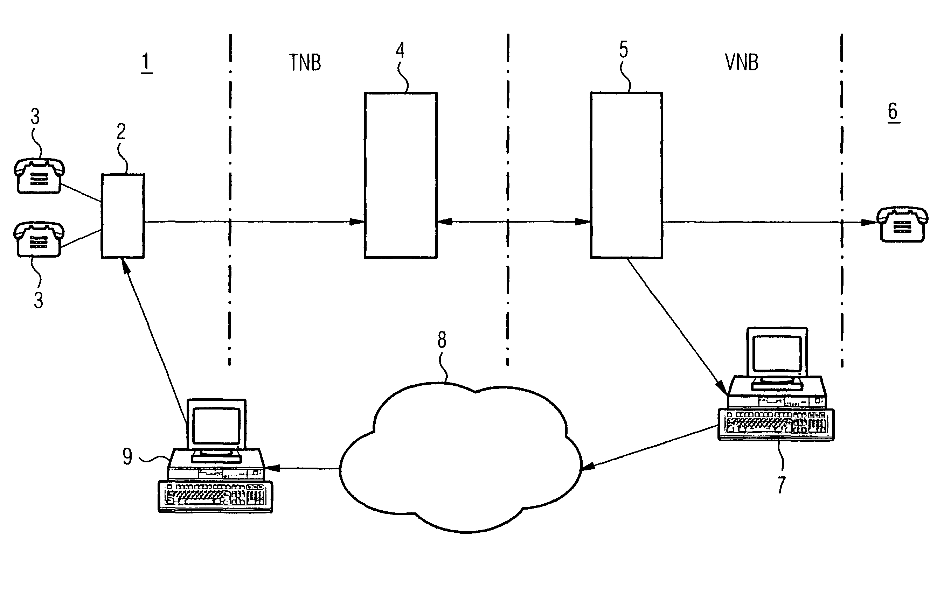

Die Erfindung wird folgend anhand der Fig. 1 erläutert.

Fig. 1 zeigt als Schema die Abrechnung der durch einen Vermittlungsnetzbetreiber erbrachten Leistungen gegenüber einem Teilnehmer 1. Dabei ist hier beispielhaft dargestellt eine Telefonanlage 2 mit Endgeraten 3. Wenn nun der Betreiber der Telefonanlage 2 gegenüber den Nutzern der Endgeräte 3, beispielsweise einem Hotelgast, abrechnen will, so hat er das Problem, daß Leistungen die ein Vermittlungsnetzbetreiber (VNB), der unter einer speziellen Vorwahl ausgewählt wurde, nicht uber die normalen Gebührenimpulse feststellbar sind. Der Teilnehmer 1 ist zunachst über eine Vermittlungsstelle 4 des Teilnehmernetzbetreibers (TNB) mit dem Telekommunikationsnetz verbunden. Dieser gewährt ihm den Netzzugang. Uber einen sog. Point of Interconnect ist nun der Teilnehmernetzbetreiber (TNB) mit dem Vermittlungsnetzbetreiber (VNB) verbunden und vermittelt ein angefordertes Gespräch an diesen weiter. Bei dem Vermittlungsnetzbetreiber (VNB) wird nun das Gespräch über zumindest eine Vermittlungsvorrichtung 5 an einen anderen Teilnehmer 6 des Telekommunikationsnetzes insgesamt weitervermittelt. Die Trennstellen zwischen Teilnehmer 1, Teilnehmernetzbetreiber (TNB), Vermittlungsnetzbetreiber (VNB) und anderem Teilnehmer 6 des hier beispielhaft dargestellten Angerufenen, sind durch gestrichelte Linien angedeutet. Weiter zeigt die Zeichnung den Computer 7, das durch einen Querbalken angedeutete Internet 8, über das die Gebühren- und Abrechnungsdaten übertragen werden und einen Computer der als Netzserver 9 des Internets 8 dient. Ein Anruf der von einem Endgerat 3 aus erfolgt, wird nun über die Telefonvermittlungsanlage 2 beim Teilnehmer 1 weiter zur Vermittlungsstelle 4 des Teilnehmernetzbetreibers (TNB), der dem Teilnehmer 1 den Netzzugang gewahrt, dann von dem Teilnehmernetzbetreiber (TNB) weiter zum Vermittlungsnetzbetreiber (VNB) über dessen Vermittlungsvorrichtung 5 und schließlich zum anderen Teilnehmer 6 vermittelt. Hat nun der Benutzer des Endgerätes 3 durch eine spezielle Vorwahl den Vermittlungsnetzbetreiber (VNB) ausgewahlt, so können keine Gebührendaten zurück über denselben Weg, folglich über den Teilnehmernetzbetreiber (TNB) zur Telefonanlage 2 übermittelt werden.
Die Vermittlungsvorrichtung 5 des Vermittlungsnetzbetreibers (VNB) erkennt nun anhand der Dienstekennung CLIP, daß der Anruf von dem Teilnehmer 1 als rufendem kommt und für diesen die Abrechnung per Internet 8 und E-Mail vereinbart ist. Im Falle, daß der Vermittlungsnetzbetreiber (VNB) sich einer Switch der Fa. Siemens als Vermittlungsvorrichtung bedient, bestande auch die Moglichkeit die signalisierte "a-Nummer" zu screenen und hierdurch die Anforderung der Abrechnung zu erkennen. Auf einem Computer 7 des Vermittlungsnetzbetreibers werden hieraufhin die Gebuhren- und Abrechnungsdaten erstellt und per Internet 8 übermittelt. Der Teilnehmer 1 kann nun durch eine Verbindung zu dem Netzserver 9, der ihm den Zugang zum Internet 8 gewahrt, sich diese Informationen, die per E-Mail abgeschickt wurden, abholen und auf einem weiteren Computer einlesen und auswerten. Hierdurch kann er nun sofort die in Anspruch genommenen Leistungen, für die Gebühren gegenüber dem Vermittlungsnetzbetreiber (VNB) zu zahlen sind, abrechnen. Die beschriebene Vorrichtung ist für den Vermittlungsnetzbetreiber (VNB) leicht zu erstellen, da bereits jetzt Computer 7 zur Abrechnung vorhanden sind und die Rechenkapazitäten der Vermittlungsvorrichtung 5 ausreichend sind, um diese weitere Funktionalität zu implementieren. Die automatisierte Abrechnung der in Anspruch genommenen Leistungen und das Versenden der Gebühren- und Abrechnungsdaten über das Internet erfordert daher im Wesentlichen softwaremäßige Anpassungen und Erweiterungen.

## Patentansprüche

1. Verfahren zur automatisierten Abrechnung der Leistungen eines Vermittlungsnetzbetreibers (VNB), die dieser gegenüber einem Teilnehmer (1) eines anderen Telekommunikationsnetzes erbringt, über welches der Teilnehmer (1) den Netzzugang erhält,
**gekennzeichnet durch** folgende Schritte:
- Feststellen der Abrechnungsanforderung anhand der vom Teilnehmer über das Netz übertragenen Daten,
- Bestimmen der Gebühren- und/oder Abrechnungsdaten für die in Anspruch genommenen Leistungen, wobei die bestimmten Gebühren- und/oder Abrechnungsdaten über einen weiteren Dienst des Vermittlungsnetzbetreibers (VNB) und/oder über ein weiteres Kommunikationsnetz (8) an den Teilnehmer (1) übermittelt werden oder abrufbar sind.

2. Verfahren nach Anspruch 1,
**dadurch gekennzeichnet,**
**daß** die bestimmten Gebühren- und/oder Abrechnungsdaten über das Internet (8) an den Teilnehmer (1) übermittelt werden oder abrufbar sind.

3. Verfahren nach einem der vorherigen Ansprüche,
**dadurch gekennzeichnet,**
**daß** die Abrechnungsanforderung anhand der mit dem Dienstemerkmal CLIP, englischer Abkürzung von Calling Line Identification Presentation übertragenen Teilnehmernummer des rufenden Teilnehmers (1) erkannt wird.

4. Verfahren nach einem der Ansprüche 1 bis 2,
**dadurch gekennzeichnet,**
**daß** die Abrechnungsanforderung anhand eines im Nutzsignal übertragenen Signals erkannt wird.

5. Verfahren nach einem der Ansprüche 1 bis 2,
**dadurch gekennzeichnet,**
**daß** die Abrechnungsanforderung in einem intelligente Netz mit INAP, englischer Abkürzung von Intelligent Network Application Protokoll, oder CAMEL, englischer Abkürzung von Costumized Application for Mobil Network Enhanced Logic, anhand einer Dienstekennung erkannt wird.

6. Verfahren nach einem der Ansprüche 1 bis 5,
**dadurch gekennzeichnet,**
**daß** die Gebühren- und Abrechnungsdaten auf Anforderung des Teilnehmers (1) übermittelt werden.

7. Verfahren nach einem der vorherigen Ansprüche,
**dadurch gekennzeichnet,**
**daß** die Gebühren- und Abrechnungsdaten sofort nach jeder Nutzung des Telekommunikationsnetzes übermittelt werden.

8. Verfahren nach einem der Ansprüche 2 bis 7,
**dadurch gekennzeichnet,**
**daß** die Gebühren- und Abrechnungsdaten per E-Mail übermittelt werden.

9. Verfahren nach einem der Ansprüche 2 bis 8,
**dadurch gekennzeichnet,**
**daß** die Gebühren- und Abrechnungsdaten im Internet (8) für den Teilnehmer (1) einsehbar sind und von diesem aus dem Internet (8) abgerufen werden können.

10. Verfahren nach einem der Ansprüche 2 bis 9,
**dadurch gekennzeichnet,**
**daß** der Teilnehmer über einen IP-Anschluß Zugang zum Internet hat.

11. Vorrichtung zur automatisierten Abrechnung der Leistungen eines Vermittlungsnetzbetreibers (VNB), die dieser gegenüber einem Teilnehmer (1) eines anderen Telekommunikationsnetzes erbringt, über welches der Teilnehmer (1) den Netzzugang erhält,
**gekennzeichnet durch**
- eine Vermittlungsvorrichtung (5), die anhand der vom Teilnehmer (1) über das Netz übertragenen Daten die Abrechnungsanforderung erkennt,
- eine Steuereinrichtung oder Computer (7) zum Bestimmen der Gebühren- und Abrechnungsdaten für die in Anspruch genommenen Leistungen, und
- Mittel zum Übermitteln der Gebühren- und/oder Abrechnungsdaten, wobei die bestimmten Gebühren- und/oder Abrechnungsdaten über einen weiteren Dienst des Vermittlungsnetzbetreibers (VNB) und/oder über ein weiteres Kommunikationsnetz (8) an den Teilnehmer (1) übermittelt werden oder abrufbar sind.

12. Vorrichtung nach Anspruch 11,
**dadurch gekennzeichnet,**
**daß** die Übermittlungsmittel durch das Internet (8) bereitgestellt werden.

13. Vorrichtung nach einem der Ansprüche 11 bis 12,
**dadurch gekennzeichnet,**
**daß** die Vermittlungsvorrichtung (5) die Abrechnungsanforderung anhand der mit dem Dienstemerkmal CLIP übertragenen Teilnehmernummer des rufenden Teilnehmers (1) erkennt.

14. Vorrichtung nach einem der Ansprüche 11 bis 12,
**dadurch gekennzeichnet,**
**daß** die Vermittlungsvorrichtung (5) die Abrechnungsanforderung anhand eines im Nutzsignal übertragenen Signals erkennt.

15. Vorrichtung nach einem der Ansprüche 11 bis 12,
**dadurch gekennzeichnet,**
**daß** die Vermittlungsvorrichtung (5) in einem intelligenten Netz (IN) mit INAP oder CAMEL die Abrechnungsanforderung anhand einer Dienstekennung erkennt.

16. Vorrichtung nach einem der Ansprüche 11 bis 15,
**dadurch gekennzeichnet,**
**daß** die Steuereinrichtung oder der Computer (7) die Gebührenund Abrechnungsdaten auf Anforderung des Teilnehmers (1) übermittelt.

17. Vorrichtung nach einem der Ansprüche 11 bis 16,
**dadurch gekennzeichnet,**
**daß** die Steuereinrichtung oder der Computer (7) die Gebührenund Abrechnungsdaten sofort nach jeder Nutzung des Telekommunikationsnetzes übermittelt.

18. Vorrichtung nach einem der Ansprüche 12 bis 17,
**dadurch gekennzeichnet,**
**daß** der Computer (7) die Gebühren- und Abrechnungsdaten per E-Mail übermittelt.

19. Vorrichtung nach einem der Ansprüche 12 bis 18,
**dadurch gekennzeichnet,**
**daß** die Steuereinrichtung oder der Computer (7) die Gebührenund Abrechnungsdaten über Internet dem Teilnehmer (1) als einsehbare und abrufbare Internet-Seiten bereitstellt.

## Claims

1. Method for automatically billing for the services of a switching network operator (VNB) which the latter provides for a subscriber (1) in another telecommunication network, which the subscriber (1) uses to gain access to the network,
**characterized by** the following steps:
- the billing request is detected from the data which the subscriber transfers via the network,
- the charge and/or billing data for the services used are determined, the charge and/or billing data determined being transmitted to the subscriber (1), or being retrievable, using a further service from the switching network operator (VNB) and/or using a further communication network (8).

2. Method according to Claim 1,
**characterized**
**in that** the charge and/or billing data determined are transmitted to the subscriber (1), or are retrievable, via the Internet (8).

3. Method according to one of the preceding claims,
**characterized**
**in that** the billing request is identified from the subscriber number of the calling subscriber (1), which subscriber number is transferred using the CLIP (Calling Line Identification Presentation) service feature.

4. Method according to either of Claims 1 and 2,
**characterized**
**in that** the billing request is identified from a signal which is transferred in the useful signal.

5. Method according to either of Claims 1 and 2,
**characterized**
**in that** the billing request is identified in an intelligent network from a service identifier using INAP (Intelligent Network Application Protocol) or CAMEL (Customized Application for Mobile network Enhanced Logic).

6. Method according to one of Claims 1 to 5,
**characterized**
**in that** the charge and billing data are transmitted at the request of the subscriber (1).

7. Method according to one of the preceding claims,
**characterized**
**in that** the charge and billing data are transmitted immediately after any use of the telecommunication network.

8. Method according to one of Claims 2 to 7,
**characterized**
**in that** the charge and billing data are transmitted by e-mail.

9. Method according to one of Claims 2 to 8,
**characterized**
**in that** the charge and billing data can be viewed by the subscriber (1) on the Internet (8) and can be retrieved from the Internet (8) by the subscriber.

10. Method according to one of Claims 2 to 9,
**characterized**
**in that** the subscriber has access to the Internet via an IP port.

11. Apparatus for automatically billing for the services of a switching network operator (VNB) which the latter provides for a subscriber (1) in another telecommunication network, which the subscriber (1) uses to gain access to the network,
**characterized by**
- a switching apparatus (5) which identifies the billing request from the data which the subscriber (1) transfers via the network,
- a control device or computer (7) for determining the charge and billing data for the services used, and
- means for transmitting the charge and/or billing data, where the charge and/or billing data determined are transmitted to the subscriber (1), or are retrievable, using a further service from the switching network operator (VNB) and/or using a further communication network (8).

12. Apparatus according to Claim 11,
**characterized**
**in that** the transmission means are provided by the Internet (8).

13. Apparatus according to either of Claims 11 and 12,
**characterized**
**in that** the switching apparatus (5) identifies the billing request from the subscriber number of the calling subscriber (1), which subscriber number is transferred using the CLIP service feature.

14. Apparatus according to either of Claims 11 and 12,
**characterized**
**in that** the switching apparatus (5) identifies the billing request from a signal which is transferred in the useful signal.

15. Apparatus according to either of Claims 11 and 12,
**characterized**
**in that** the switching apparatus (5) in an intelligent network (IN) identifies the billing request from a service identifier using INAP or CAMEL.

16. Apparatus according to one of Claims 11 to 15,
**characterized**
**in that** the control device or the computer (7) transmits the charge and billing data at the request of the subscriber (1).

17. Apparatus according to one of Claims 11 to 16,
**characterized**
**in that** the control device or the computer (7) transmits the charge and billing data immediately after any use of the telecommunication network.

18. Apparatus according to one of Claims 12 to 17,
**characterized**
**in that** the computer (7) transmits the charge and billing data by e-mail.

19. Apparatus according to one of Claims 12 to 18,
**characterized**
**in that** the control device or the computer (7) provides the subscriber (1) with the charge and billing data via the Internet in the form of viewable and retrievable Internet pages.

## Revendications

1. Procédé de facturation automatisée des services d'un opérateur de réseau de commutation (VNB) que celui-ci fournit à un abonné (1) d'un autre réseau de télécommunications par lequel l'abonné (1) a accès au réseau,
**caractérisé par** les étapes suivantes :
- identification de la demande de facturation à partir des données transmises par l'abonné à travers le réseau,
- détermination des données de taxation et/ou de facturation pour les services utilisés, les données déterminées de taxation et/ou de facturation étant, par l'intermédiaire d'un autre service de l'opérateur de réseau de commutation (VNB) et/ou par l'intermédiaire d'un autre réseau de communication (8), transmises à l'abonné (1) ou interrogeables.

2. Procédé selon la revendication 1,
**caractérisé en ce que**
les données déterminées de taxation et/ou de facturation sont, par l'Internet (8), transmises à l'abonné (1) ou interrogeables.

3. Procédé selon l'une des revendications précédentes,
**caractérisé en ce que**
la demande de facturation est identifiée à partir du numéro d'abonné de l'abonné (1) appelant transmis avec la caractéristique de service CLIP, abréviation anglaise de "Calling Line Identification Presentation".

4. Procédé selon l'une des revendications 1 à 2,
**caractérisé en ce que**
la demande de facturation est identifiée à partir d'un signal transmis dans le signal utile.

5. Procédé selon l'une des revendications 1 à 2,
**caractérisé en ce que**
la demande de facturation est identifiée dans un réseau intelligent avec INAP, abréviation anglaise de "Intelligent Network Application Protocoll", ou CAMEL, abréviation anglaise de "Costumized Application for Mobil Network Enhanced Logic", à l'aide d'une identification de service.

6. Procédé selon l'une des revendications 1 à 5,
**caractérisé en ce que**
les données de taxation et de facturation sont transmises à la demande de l'abonné (1).

7. Procédé selon l'une des revendications précédentes,
**caractérisé en ce que**
les données de taxation et de facturation sont transmises immédiatement après chaque utilisation du réseau de télécommunications.

8. Procédé selon l'une des revendications 2 à 7,
**caractérisé en ce que**
les données de taxation et de facturation sont transmises par E-mail.

9. Procédé selon l'une des revendications 2 à 8,
**caractérisé en ce que**
les données de taxation et de facturation sont consultables dans l'Internet (8) par l'abonné (1) et peuvent être interrogées par celui-ci dans l'Internet (8).

10. Procédé selon l'une des revendications 2 à 9,
**caractérisé en ce que**
l'abonné a accès à l'Internet par une connexion IP.

11. Dispositif de facturation automatisée des services d'un opérateur de réseau de commutation (VNB) que celui-ci fournit à un abonné (1) d'un autre réseau de télécommunications par lequel l'abonné (1) accède au réseau,
**caractérisé par**
- un dispositif de commutation (5) qui identifie la demande de facturation à partir des données transmises par l'abonné (1) à travers le réseau,
- un dispositif de contrôle ou ordinateur (7) pour déterminer les données de taxation et de facturation pour les services utilisés, et
- des moyens de transmission des données de taxation et/ou de facturation, les données déterminées de taxation et/ou de facturation étant, par l'intermédiaire d'un autre service de l'opérateur de réseau de commutation (VNB) et/ou par l'intermédiaire d'un autre réseau de communication (8), transmises à l'abonné (1) ou interrogeables.

12. Dispositif selon la revendication 11,
**caractérisé en ce que**
les moyens de transmission sont fournis par l'Internet (8).

13. Dispositif selon l'une des revendications 11 à 12,
**caractérisé en ce que**
le dispositif de commutation (5) identifie la demande de facturation à partir du numéro d'abonné de l'abonné appelant (1), transmis avec la caractéristique de service CLIP.

14. Dispositif selon l'une des revendications 11 à 12,
**caractérisé en ce que**
le dispositif de commutation (5) identifie la demande de facturation à partir d'un signal transmis dans le signal utile.

15. Dispositif selon l'une des revendications 11 à 12,
**caractérisé en ce que**
le dispositif de commutation (5) identifie la demande de facturation dans un réseau intelligent (IN) avec INAP ou CAMEL à l'aide d'une identification de service.

16. Dispositif selon l'une des revendications 11 à 15,
**caractérisé en ce que**
le dispositif de contrôle ou l'ordinateur (7) transmet les données de taxation et de facturation à la demande de l'abonné (1).

17. Dispositif selon l'une des revendications 11 à 16,
**caractérisé en ce que**
le dispositif de contrôle ou l'ordinateur (7) transmet les données de taxation et de facturation immédiatement après chaque utilisation du réseau de télécommunications.

18. Dispositif selon l'une des revendications 12 à 17,
**caractérisé en ce que**
l'ordinateur (7) transmet les données de taxation et de facturation par E-mail.

19. Dispositif selon l'une des revendications 12 à 18,
**caractérisé en ce que**
le dispositif de contrôle ou l'ordinateur (7) fournit à l'abonné (1) les données de taxation et de facturation par Internet sous forme de pages Internet consultables et interrogeables.
